# EUROPEAN PATENT APPLICATION

(11) **EP 4 671 415 A1**
(43) Date of publication of application: **31.12.2025**
(21) Application number: 24185453.8
(22) Date of filing: 28.06.2024
(51) Int. Cl.: C25B 13/00, C25B 9/19, C25B 9/73

(54) **A SEPARATOR FOR WATER ELECTROLYSIS**

(71) Applicant: AGFA-GEVAERT NV, 2640 Mortsel (BE)
(72) Inventor: LOCCUFIER, Johan, 2640 Mortsel (BE)
(74) Representative: Goethals, Fabienne

(57) **Abstract**

A separator for water electrolysis comprising a cathode facing side (101) and an anode facing side (201), characterized in that the cathode- and anode facing sides are visually distinct.

## Description

### Technical field of the invention

The present invention relates to a separator for water electrolysis.

### Background art for the invention

Nowadays, hydrogen is used in several industrial processes, for example as raw material in the chemical industry and as a reducing agent in the metallurgic industry. Hydrogen is a fundamental building block for the manufacture of ammonia, and hence fertilizers, and of methanol, used in the manufacture of many polymers. Refineries, where hydrogen is used for the processing of intermediate oil products, are another area of use. However, the production of hydrogen from fossil fuels results in massive CO₂ emission.

Hydrogen is also being considered an important future energy carrier, which means it can store and deliver energy in a usable form. Energy is released by an exothermic combustion reaction with oxygen thereby forming water. During such combustion reaction no greenhouse gases containing carbon are emitted.

For the realization of a low-carbon society, renewable energies using natural energy such as solar light and wind power are becoming more and more important. The production of electricity from wind power and solar power generation systems is very much dependent on the weather conditions and therefore variable, leading to an imbalance of demand and supply of electricity. To store surplus electricity, the so-called power-to-gas technology, wherein electrical power is used to produce gaseous fuel such as hydrogen, has attracted much interest in recent years. As production of electricity from renewable energy sources will increase, the demand for storage and transportation of the produced energy will also increase.

Water electrolysis is an important manufacturing process wherein renewable electricity may be converted into hydrogen. Hydrogen produced in this way is often referred to as green hydrogen, emphasizing that no greenhouse gases are formed during its production. Ammonia and steel prepared from or with green hydrogen are also referred to as green ammonia and green steel.

Water electrolysis is carried out in an electrolyser composed of several electrolytic cells. In such an electrolytic cell, hydrogen is formed at the cathode while oxygen is formed at the anode. A separator, also referred to as a membrane or a diaphragm, in the electrolytic cell prevents recombination of the hydrogen and oxygen formed. On the other hand, the separator has to ensure a sufficient ionic conductivity through the separator.

There are different technologies used for water electrolysis, such as Alkaline water electrolysis (AWE), Proton Exchange Membrane (PEM) electrolysis and Anion Exchange Membrane (AEM) electrolysis.

Each technology requires a dedicated separator. Such a separator may be symmetric or asymmetric. The environment at the anode and the cathode in an electrolytic cell differs by the different reactions occurring at the electrodes: oxygen formation at the anode and hydrogen formation at the cathode.

Separators and processes for water electrolysis have been developed and improved over the last decades. For example, EP1776490 A1 (VITO) discloses a process for preparing a symmetrical ion-permeable web-reinforced separator membrane. An example of a Proton Exchange Membrane is disclosed by EP3892643 A1 (AGC) and an example of an Anion Exchange Membrane in WO2019/076860 A1 (EVONIK).

Sometimes cheap inferior imitations of a separator are unknowingly incorporated into an electrolyser, which leads to hydrogen being produced in a less economical and less efficient manner.

However, there is still a need for improved separators and water electrolysis processes exhibiting improved properties such as gas cross over, conductivity and durability, whereby hydrogen can be produced in a more economical and efficient manner.

### Summary of the invention

In order to overcome the problems described above, preferred embodiments of the present invention have been realized with a separator as defined in claim 1.

It has been found that for an asymmetric separator its orientation in an electrolytic cell may influence properties such as gas cross over, durability and conductivity. In such a case, it must be possible for an operator to distinguish the anode facing side and the cathode facing side of the separator from each other with the naked eye. This allows the operator to optimally mount the separators in an efficient and fast way into an electrolytic cell or electrolyser. Optimally mounting in this context means that when the orientation of the separator in the electrolytic cell has an influence on its performance the operator indeed mounts the separator in the right orientation in the electrolytic cell.

The present invention is also useful for symmetrical separators. Properties of a separator can deteriorate over time due to a limited shelf-life. Often separators are removed from their packaging and stored under specific conditions of temperature and humidity. In doing so the age or specific type mentioned on the packaging is no longer directly linked to the separators that are usually present in a number of hundred or more in a packaging. A smaller durability could be obtained in the absence of this information because the separator may have exceeded its expiration date or be of a different type. Such a symmetrical separator may have a visually distinct side by carrying a printed barcode or an unique batch number, allowing identification of the separator.

Further objects of the invention will become apparent from the description hereinafter.

### Brief description of the drawings

**Figure 1** shows schematically an embodiment of an electrolytic cell (1) according to the invention including a separator (10) comprising an anode facing layer (100) having an anode facing side (101) facing the anode (120) and a cathode facing layer (200) having a cathode facing side (201) facing the cathode (220). The cathode facing layer (200) includes a colourant.
**Figure 2** shows schematically an embodiment of an electrolytic cell (1) according to the invention wherein the separator contains a colourant in the form of a colouring layer (Fig.2a, 202) or a pattern (Fig.2b, 203).
**Figure 3** shows schematically an embodiment of a double sided AWE separator according to the present invention (500) that carries on one side of a porous support (530) an anode facing layer (510) while carrying on the other side of the porous support a cathode facing layer (520). The anode facing layer includes a colourant.
**Figure 4** shows schematically an embodiment of a double sided AWE separator according to the present invention wherein the separator contains a colourant in the form of a colouring layer (Fig.4a, 540) or a pattern (Fig.4b, 550).
**Figure 5** shows schematically an embodiment of a single sided AWE separator according to the present invention that carries a layer (560) coated on one side of a porous support (530). A colouring layer (540) or pattern (550) is applied on the surface of the layer 560 (Fig.5a and Fig.5b) or on the other side of the support 530 (Fig. 5c and Fig.5d).
**Figure 6** shows a picture of both sides of a separator according to the present invention prepared according to Example 3.

### Detailed description of the invention

### Separator

A separator is also referred to herein as a diaphragm or a membrane, as the latter two are synonyms commonly used by the person skilled in the art of water electrolysis.

The separator according to the present invention comprises an anode facing side (101) and a cathode facing side (201) characterized in that both sides are visually distinct.

Visually distinct as used herein means that that this can be seen with the naked eye, i.e. it can be seen without the help of an instrument, such as a microscope, under light conditions preferably having a wavelength from 250 to 1500 nm, more preferably from 300 to 1000 nm, and most preferably from 380 to 750 nm. The wavelength range of 380 to 750 nm is known as the visible spectrum. The visible spectrum is the band of the electromagnetic spectrum that is directly visible to the human eye. However, the present invention also includes wavelengths that are indirectly visible through photoluminescence, such as fluorescence. For example, one of the separator sides absorbs radiation from the ultraviolet region of the electromagnetic spectrum (invisible to the human eye) and emits light in the visible region. This gives the fluorescent separator side a distinct colour that can only be seen when the separator side has been exposed to UV light.

A colourant is preferably used to render both sides of a separator visually distinct. A colourant as used herein encompasses a luminescent colourant, such as a fluorescent colourant. Typically such a fluorescent colourant becomes visible to the human eye upon irradiation with ultraviolet light. However, a colourant may also become visible upon irradiation with infrared light having a wavelength in the range of 750 nm to 1500 nm or preferably 750 nm to 1000 nm . When used to distinguish both sides of a separator, an operator has then to expose the separator to ultraviolet or infrared light. Easy to handle ultraviolet radiation sources are readily available, and this is also the case for infrared radiation sources, especially in the range of 750 nm to 1000 nm.

In a first embodiment, a colourant is contained in a separator layer (100 or 200) while in a second embodiment a colourant is applied onto an outer surface of the separator. Said colourant may be contained only at an edge of the separator layer (100 or 200) or with a maximum distance of said edge between 200 µm and 50000 µm.

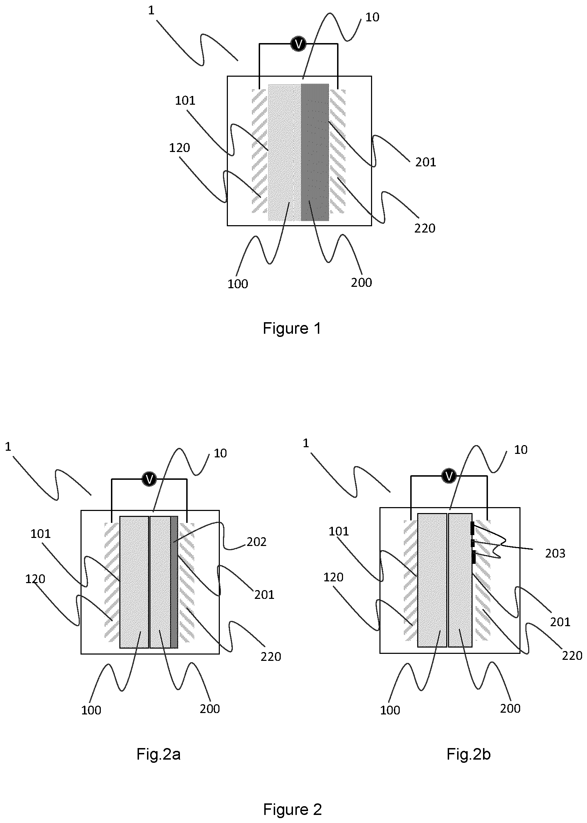

An embodiment of a separator according to the first embodiment, introduced between the anode and the cathode of an electrolytic cell (1), is schematically shown in Figure 1. The separator comprises two layers (100, 200) wherein one layer, for example the cathode facing layer (200), includes a colourant. However, both layers (100, 200) may also include a different colourant making the two layers (100, 200) visually distinct. The latter may be preferred when the layers as such are transparent. Adding a colourant to one layer may in that case not be sufficient for an operator to easily distinguish both sides of the separator.

A separator according to the second embodiment, introduced in an electrolytic cell (1), is shown in Figure 2a and Figure 2b. The separator also comprises two layers (100, 200) but now a colourant is applied on the outer surface of one layer, in this case on the cathode facing layer (200). In Fig. 2a the colourant is applied on one side of the separator by applying an additional continuous layer, referred to as a colouring layer (202), while in Fig. 2b the colourant is applied on one side of the separator in a pattern (203) by means of a printing technique. Said colourant may be applied only at an edge of the separator layer (100 or 200) or with a maximum distance of said edge between 200 µm and 50000 µm. Different colourants may also be applied on both sides of the separator. The colouring layer(s) may in addition to colourants also comprise other functional ingredients to further optimize the separator properties. Preferred functional ingredients include anti-oxidants, preferably at the anode side where oxygen is formed, recombination catalysts, etc.

Any coating or printing technique may be used to apply the colouring layer. Preferred coating techniques are selected from the group consisting of slot-die coating, curtain coating, blade coating, bar coating, air knife coating, cascade coating, extrusion coating, reverse roll coating, kiss coating and dip coating. For accurate thickness control, highly preferred coating techniques are air knife coating, cascade coating, curtain coating, reverse roll coating, slot-die coating and kiss coating. The colouring layer(s) are preferably applied by coating at the end of a manufacturing process before cutting the separator to a certain size. A colouring layer may however also be applied by a printing technique, which allows to apply the colouring layer or a pattern also after cutting the separator to a certain size. A pattern is preferably printed after cutting the separator to a certain size, as this allows to position it in a preferred location on the separator. The pattern preferably includes a colourant.

Any printing technique may be used to apply the colourant(s), including offset printing, flexographic printing, screen printing and inkjet printing, screen printing and inkjet printing being more preferred, inkjet printing being the most preferred. An advantage of using a printing technique instead of a coating technique is the possibility to minimize the surface area of the separator covered with colourant. This may be advantageous when the colourant may adversely affect the operating properties of the separator, for example the ionic conductivity. Also, using a printing technique makes it possible to select the position of a pattern (203) on the separator. Variable printing using inkjet makes it possible to customize the coloured pattern (203) easily. Also, printing may be used to incorporate an anticounterfeiting feature in the coloured pattern. A coloured pattern may include alphanumeric data, a barcode, a QR code or another machine-readable code. Such a code may be read with for example a smartphone by the operator and may give him information on the separator ensuring him that he is indeed using the right separator. Incorporating fluorescent colourants which become only visible upon UV exposure may be used as an effective anticounterfeiting feature.

In a different aspect of the invention, the invention relates to a separator for water electrolysis comprising a printed photolumiscent pattern on at least one side of the separator. The photolumiscent pattern is preferably printed with screen printing, flexographic printing or inkjet printing, with inkjet printing being more preferred. The printed photolumiscent pattern functions as an anticounterfeiting feature avoiding the incorporation of inferior imitations of a separator into an electrolyzer. The latter would lead to hydrogen being produced in a less economical and less efficient manner.

According to a third embodiment, a laser may be used to render one side of a separator visually distinct from the other. In principle laser engraving, wherein material is removed from the separator upon irradiation with a laser, may be used, but removing material from the separator may negatively influence its mechanical and gas-barrier properties. Hence laser marking, a technique which does not remove material from the separator upon laser irradiation, is preferred and described in more detail below.

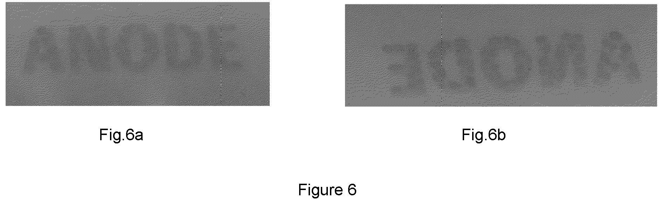

As mentioned above, when the separator is transparent it may be difficult or even impossible to distinguish the anode and the cathode side from each other, even when a colourant is used in or on one side of the membrane. However, then a pattern may be applied by printing or laser marking on one side of the membrane, wherein the pattern is seen from the other side as a mirror image. This effect can be used to distinguish the anode and the cathode side from each other. This is illustrated in the examples (Figure 6). The word "ANODE" is printed as a pattern onto the anode facing side of a transparent membrane. When viewed from the anode side the word "ANODE" is readable (Fig. 6a). However, when viewed from the cathode side, a mirror image is visible making it unreadable (Fig. 6b). In this way an operator can easily distinguish the anode facing side of the separator from the cathode facing side.

The colourants are preferably diffusion hindered to avoid diffusion of the colourant. For example to avoid diffusion of a colourant added to one layer of a separator to other layer(s) of the separator, or to avoid diffusion of a colourant applied on the separator.

Diffusion hindered colourants are selected from pigments and diffusion hindered dyes, described below in more detail.

The separator may be selected from an AWE separator, an Anion Exchange Membrane (AEM) and a Proton Exchange Membrane (PEM).

A typical AWE membrane comprises one or more porous layers provided on a porous support as described in more detail below. When one porous layer is provided on one side of the porous support (a so-called single sided separator) or when two different porous layers (a so-called double sided separator) are provided on each side of the porous support an asymmetric membrane is obtained wherein the orientation of such an asymmetric membrane in an electrolytic cell may influence its performance. In that case, it is preferred that the anode- and cathode facing side of the AWE separator are visually distinct. Asymmetric AWE membranes are disclosed in for example WO2019/011844 A1 and WO 2023/208776 A1, both from AGFA GEVAERT NV.

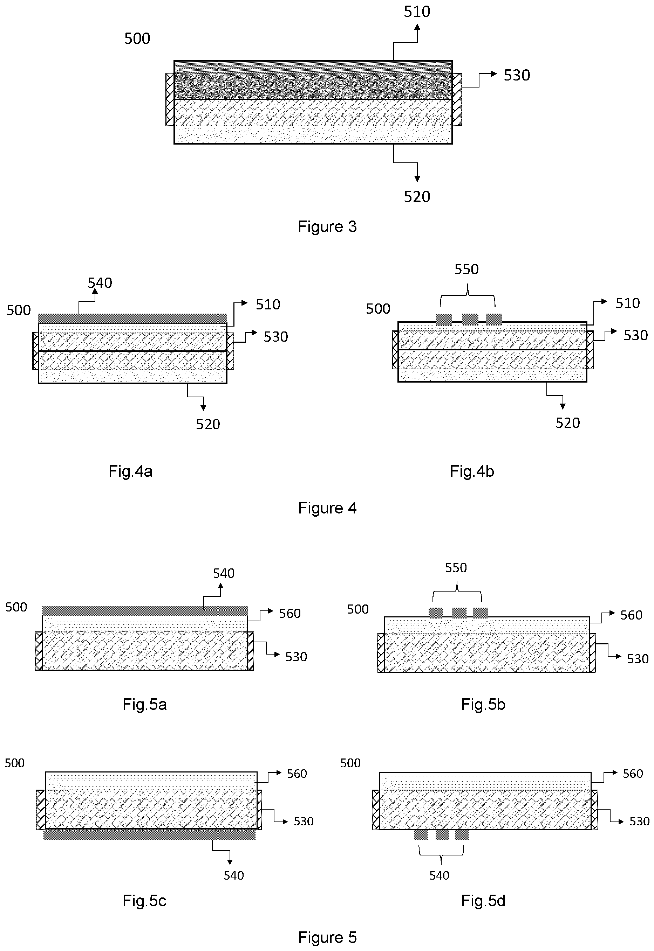

Preferred AWE separators include a porous layer provided on both sides of a porous support. When the porous layers are different from each other, for example in their composition, thickness or pore structure, and when the orientation of such a separator into an electrolytic cell is important for optimal performance, a colourant may be added to one porous layer, or different colourants may be added to each porous layer. Such a separator is schematically shown in Figure 3. A separator (500) comprises an anode facing porous layer (510) provided on one side of a porous support (530) and a cathode facing porous layer (520) provided on the other side of the porous support. A colourant is added to one of the porous layers (510 or 520) making one side of the separator visually distinct from the other side of the separator. As the separator may often have a white color, due to a large amount of inorganic particles, for example zirconium oxide, it should be immediately clear that adding a colourant having a colour different from white into one porous layer will result in visually distinct sides of the separator.

Instead of adding a colourant to a porous layer of an AWE separator, the colourant may also be added to an additional layer, a colouring layer (540), applied on at least one of the porous layers (510, 520). Such a separator is schematically shown in Figure 4a. A separator (500) comprises two porous layers (510, 520) provided on each side of a porous support (530). A colouring layer (540) including a colourant is applied to one side of the separator making both sides of the separator visually distinct from one another. Two colouring layers, each having a different colour, may also be applied on both porous layers to make both sides of the separator visually distinct, by applying one colouring layer on one porous layer and the other colouring layer on the other porous layer.

Such a colouring layer may be a porous layer but is preferably a non-porous layer. A non-porous colouring layer will then additionally improve the gas barrier properties of the separator. Such a non-porous colouring layer is described in more detail below. When using a non-porous colouring layer, the colouring layer is preferably provided on the cathode side of the separator where hydrogen is formed to minimize the volume fraction of hydrogen in oxygen (HTO). Above 4% hydrogen in oxygen the mixture is explosive and therefore a maximum of 2% for HTO has been agreed upon in the International Standard on hydrogen production using water electrolysis (ISO22734).

The colouring layer may further include other ingredients to optimize the separator properties. For example, the colouring layer may include a recombination catalyst to further improve the HTO. A recombination catalyst recombines hydrogen and oxygen to water, avoiding increase of HTO. Preferred recombination catalysts are selected from the group consisting of NiO, Pt, Ir, IrO2 and stainless steel.

The colour may however also be added as a pattern (550) on at least one of the porous layers (510, 520). Such a separator is schematically shown in Figure 4b. A separator (500) comprises two porous layers (510, 520) provided on each side of a porous support (530). A pattern (540) is applied to one side of the separator making both sides of the separator visually distinct from one another. Two different patterns may also be applied on both porous layers to make both sides of the separator visually distinct, by applying one pattern on one porous layer and the other pattern on the other porous layer.

For single sided AWE separators wherein only one porous layer is provided on a porous support, for example as disclosed in EP3312306 A1 (KAWASAKI HEAVY IND LTD), a colourant may be applied on the porous layer, e.g. the anode facing porous layer (510), or on the porous support (530) as an additional colouring layer (540) or a pattern (550) (see Fig. 5a to Fig.5d).

The amount of colourants in the layer of the separator to be coloured is preferably from 0.1 to 25 wt%, more preferably from 0.5 to 10 wt%, most preferably from 1 to 5 wt%, all relative to the total dry weight of the layer.

PEM and AEM often comprise only one polymer layer. In such a case, they are symmetric and there is usually no need to render both sides of the separator visually distinct, unless for anticounterfeiting purposes as explained above. However, when a PEM or AEM comprises multiple layers, for example a reinforcement layer or a protection layer, and if the orientation of the separator in an electrolytic cell determines its properties, then it becomes important to make both sides of the separator visually distinct so that no errors in mounting occur in the electrolytic cell or the electrolyzer. This may be realized as described above for AWE separators.

For example, for both PEM and AEM it may be advantageous to provide a protection layer on the anode facing side to protect the ion-conductive layer against oxidation.

Preferred AEM separators are disclosed in for example WO2019/076860 A1 and WO2021013694A1 (both from EVONIK), WO2017/117678 A1 and WO20188023097 A1 (both from IONOMR) and the unpublished EP-A 2023/159885.5 (filed 3/03/2023 by AGFA GEVAERT NV).

Preferred PEM separators have recently been reviewed by Gohil and Dutta (Polymers for Advanced Technologies, 32(12), 4598-4615 (2021)) and by Hammi et al. (Journal of Membrane Science and Research, 9(3), 1978109/1-1978109/16 (2023)).

### Colouring Layer

A colouring layer may be used to render one side of a separator visually distinct from the other side, as described above. The colouring layer comprises a colourant and preferably a polymer functioning as a binder. The colouring layer may comprise other ingredients to further optimize properties of the separator. The colouring layer may cover a part or the whole of an anode facing layer and/or the cathode facing layer.

In a preferred embodiment, the colouring layer dissolves after mounting the separator into an electrolytic cell. Removal of the colouring layer generally has the advantage of improving the ion conductivity.

A colouring layer based on a water soluble polymer in combination with a water soluble or water dispersible colourant is a first embodiment of a colouring layer that can be removed from the separator after mounting the separator into an electrolytical cell. The polymer can be nonionic, anionic or cationic.

Typical water soluble non-ionic polymers can be selected from the group consisting of poly(vinyl alcohol) or vinyl alcohol copolymers or derivatives, poly(acryl amide) or copolymers thereof and polysaccharides such as dextrans or derivatives thereof, pullulan or derivatives thereof or starch derivatives.

Typical anionic polymers can be selected from sulfonate functionalized polymers, carboxylate functionalized polymers, phoshonate functionalized polymers and phosphate functionalized polymers.

Cationic polymers preferably comprise quaternary ammonium functional groups such as poly(DADMAC). In a more preferred embodiment, an ionizable polymeric binder is used, where the ionization is tuned in accordance with the technology used, this to allow a certain water fastness before mounting the separator into the electrolytical cell but still being capable of removing the coloring layer under operational conditions.

For PEM, operating in an acidic environment, polymers that can be protonated under operational conditions are preferred. Polymers comprising basic moieties selected from the group consisting of nitrogen containing heterocyclic compounds, such as pyridines and (benz)imidazoles, primary, secondary or tertiary amines, guanidines and amidines are particularly preferred for application in PEM. In a further preferred embodiment, these polymeric binders are combined with cationic dyes.

For AWE and AEM, operating under alkaline conditions, polymers comprising functional groups that can be deprotonated under operational conditions are particularly preferred. Polymers comprising carboxylic acids, phenolic groups and sulfonamide groups are particularly preferred, carboxylic acids being the most preferred. In a further preferred embodiment, these polymers are combined with anionic dyes.

The colouring layer, in particular for AWE separators, is preferably a non-porous layer. Such a non-porous layer will further decrease the gas permeability through the separator, although hydroxyl ions can still permeate through the non-porous layer. In this case however, the colouring layer does preferably not dissolve during operation in an electrolyser.

The non-porous colouring layer including a binder described below, has to withstand typical AWE conditions, such as 30 wt % KOH at 80 °C during a prolonged time. Therefore, the non-porous layer preferably includes a binder that is alkali-stable making the non-porous layer and thus the separator according to the present invention suitable for alkaline water electrolysis. An alkali-stable binder as used herein means a binder that shows minimal degradation in polymer chain length or changes in the polymer chemistry after 4 weeks exposure to 6 M KOH at 120 °C.

The non-porous colouring layer preferably does not adversely affect the areal resistance/conductivity of the separator. Therefore, the hydroxyl permeability of the non-porous layer in the AWE conditions must be sufficient.

The non-porous colouring layer preferably includes a binder that is hydrophilic as this will enhance the solubility of KOH (and water) in the non-porous layer and thus will result in a decrease of the gas permeability without adversely affecting the conductivity/areal resistance. A contact angle of water on the surface of the non-porous layer, measured as described below, is preferably less than 90 degrees, more preferably less than 75 degrees most preferably less than 60 degrees. Particularly preferred, a contact angle of water on the surface of the non-porous layer is from 40 to 60 degrees. It has been observed that less adhesion of gas bubbles occurs on hydrophilic non-porous layers resulting in a lower areal resistance.

The non-porous colouring layer preferably has a smooth surface to improve the contact with the catalyst layer or an electrode in an electrolytic cell.

The hydroxyl permeability of the non-porous layer may be tuned amongst others by the layer thickness, the nature of the binder, the degree of crosslinking, the crosslinker type and by blending different binder polymers in the non-porous layer. This allows for the use of a wide range of polymers having different swelling characteristics in an aqueous alkaline medium.

The binder is preferably crosslinked to further increase its long-term stability in the highly alkaline electrolyte of the electrolyser wherein the separator is used.

The non-porous colouring layer may further include one or more other ingredients to optimize its properties or to optimize the coating process. Such other ingredients are, for example, surfactants, inorganic particles, viscosity regulators and recombination catalysts.

Preferred recombination catalysts are selected from the group consisting of NiO, Pt, Ir, IrO2 and stainless steel.

The dry thickness of the non-porous colouring layer is preferably from 0.01 to 50 µm, more preferably from 0.1 to 25 µm, most preferably from 0.5 to 15 µm.

The binder may be selected from, for example, optionally modified polybenzimidazoles, polysulfones, poly(ether sulfones), poly(ether ketones), poly-(phenylene ethers), poly(ethers), poly(acetals), styrene-based polymers and copolymers and poly(olefines) based polymers and copolymers. Preferred polymers have an all-carbon polymer backbone.

The binder is preferably functionalized with non-ionic hydrophilic groups, where the modification is preferably selected from the group consisting of hydroxylation and ethoxylation. Preferred hydrophilic fragments are selected from the group consisting of polyhydroxyl fragments and poly(ethylene oxide) fragments. The fragments may be part of or may be grafted on the polymer backbone. The hydrophilic fragments may be arranged in different geometries such as block copolymers or graft copolymers. Poly(ethylene glycol) based polymers or copolymers are particularly preferred, including block copolymers such as poly(olefin-block co-ethylene glycol) or graft copolymers such as poly(ethylene glycol) grafted on a poly(sulfone) or a poly(ether sulfone). Polyhydroxyl containing polymers are most preferred. Typical examples of polyhydroxy containing polymers include polysaccharides and vinyl alcohol based (co)polymers. Preferred polysaccharides include dextran and pullulan and derivatives thereof and starch derivatives. Preferred vinyl alcohol based (co)polymers include poly(vinyl alcohol), poly(ethylene-co-vinyl alcohol) and poly(ethylene-co-vinyl amine).

The binder is preferably selected from the group consisting of poly(ethylene glycol) or copolymers thereof, poly(saccharides), poly(ethylene-co-vinyl alcohol), poly(ethylene-co-vinyl amine) and poly(vinyl alcohol). A particularly preferred binder is poly(vinyl alcohol) (PVA) or poly(ethylene-co-vinyl alcohol).

PVA is typically prepared by hydrolysis of poly(vinyl acetate). The properties of the PVA is determined by the degree of hydrolysis. Preferred hydrolysis degrees are from 50 to 100 %, more preferably from 70 to 99 %, most preferably from 85 to 98 %. It has been observed that non-porous layers including a PVA with a high degree of hydrolysis, i.e. above 85 %, are more hydrophilic and less soluble in water.

The molecular weight of the PVA is preferably from 10 to 250 kDa, more preferably from 75 to 150 kDa, most preferably from 85 to 125 kDa. It has been observed that a non-porous colouring layer including a PVA with a high molecular weight, i.e. Mw of at least 75 kDa, has an improved homogeneity.

### Pigments

The colourant may be a pigment. An advantage of pigments is the minimal diffusion in the separator.

Colour pigments may be black, cyan, magenta, yellow, red, orange, violet, blue, green, brown, white, mixtures thereof, and the like. The colour pigment may be chosen from those disclosed by HERBST, Willy, et al. Industrial Organic Pigments, Production, Properties, Applications. 3rd edition. Wiley - VCH , 2004. ISBN 3527305769.

The colour pigments may be inorganic or organic, but for colours other than black or white, they are preferably organic colour pigments. The latter provide for a higher colour intensity than inorganic pigments, reducing the amount needed to obtain a certain colour density.

The colour pigments may be selected taking into account the colour of the membrane. For example, for AWE membranes, which are typically white due to the high amount of inorganic particles, white coloured pigments are not preferred.

Particular preferred pigments are C.I. Pigment Yellow 1, 3, 10, 12, 13, 14, 17, 55, 65, 73, 74, 75, 83, 93, 97, 109, 111, 120, 128, 138, 139, 150, 151, 154, 155, 175, 180, 181, 185, 194 and 213. For making reliable yellow inkjet inks having good colour intensity, most preferably pigments are selected from the group consisting of C.I. Pigment Yellow 120, 139, 150, 151, 155, 180, 213 and mixed crystals thereof. Particular preferred pigments for providing a red or magenta colour are C.I. Pigment Red 17, 22, 23, 41, 48:1, 48:2, 49:1, 49:2, 52:1, 57:1, 88, 112, 122, 144, 146, 149, 170, 175, 176, 184, 185, 188, 202, 206, 207, 210, 216, 221, 248, 251, 254, 255, 264, 266, 270 and 272. Other particular preferred pigments are C.I. Pigment Violet 19, 23, 32, and 37.

Particular preferred pigments for providing a cyan or blue colour are C.I. Pigment Blue 15:1, 15:2, 15:3, 15:4, 15:6, 16, 56, 61 and (bridged) aluminium phthalocyanine pigments. For a reliable inkjet ink exhibiting high colour intensity, most preferably C.I. Pigment Blue 15:3, or 15:4 is selected.

Particular preferred pigments for providing an orange colour are C.I. Pigment Orange 5, 13, 16, 34, 40, 43, 59, 66, 67, 69, 71 and 73.

Particular preferred pigments for providing a green colour are C.I. Pigment Green 7 and 36.

Particular preferred pigments for providing a brown colour are C.I. Pigment Brown 6 and 7.

Suitable pigments include mixed crystals of the above particular preferred pigments. Mixed crystals are also referred to as solid solutions. For example, under certain conditions different quinacridones mix with each other to form solid solutions, which are quite different from both physical mixtures of the compounds and from the compounds themselves. In a solid solution, the molecules of the components enter into the same crystal lattice, usually, but not always, that of one of the components. The x-ray diffraction pattern of the resulting crystalline solid is characteristic of that solid and can be clearly differentiated from the pattern of a physical mixture of the same components in the same proportion. In such physical mixtures, the x-ray pattern of each of the components can be distinguished, and the disappearance of many of these lines is one of the criteria of the formation of solid solutions. A commercially available example is Cinquasia Magenta RT-355-D from BASF AG.

Carbon black is preferred as a black pigment. Suitable black pigments include carbon blacks such as Pigment Black 7 (e.g. Carbon Black MA8^{®} from MITSUBISHI CHEMICAL), Regal^{®} 400R, Mogul^{®} L, Elftex^{®} 320 from CABOT Co., or Carbon Black FW18, Special Black 250, Special Black 350, Special Black 550, Printex^{®} 25, Printex^{®} 35, Printex^{®} 55, Printex^{®} 90, Printex^{®} 150T from DEGUSSA.

It is also possible to make mixtures of pigments. For example a neutral black colour may be obtained by mixing a black pigment and a colour pigment having an absorption maximum between 500 and 700 nm, such as a cyan and/or magenta pigment. This generally results in an improved contrast whereby machine-readable codes on a separator can be read with minimal errors.

The pigment particles should be sufficiently small when they are used in an inkjet ink to permit free flow of the ink through the inkjet-printing device, especially at the ejecting nozzles. It is also desirable to use small particles for maximum colour strength and to slow down sedimentation.

The numeric average pigment particle size for an inkjet ink is preferably between 0.050 and 1 µm, more preferably between 0.070 and 0.300 µm and particularly preferably between 0.080 and 0.200 µm. . An average particle size smaller than 0.200 µm results in more stable inkjet inks as sedimentation is minimized.

The numeric average pigment particle size of pigment particles is best determined with a Brookhaven Instruments Particle Sizer BI90plus based upon the principle of dynamic light scattering. The ink is then diluted with a suitable organic solvent, for example, for a UV curable inkjet ink with ethyl acetate to a pigment concentration of 0.002 wt%. The measurement settings of the BI90plus are: 5 runs at 23°C, angle of 90°, wavelength of 635 nm and graphics = correction function.

A preferred white pigment is titanium oxide. Preferred titanium oxide pigments have a refractive index greater than 1.60, preferably greater than 2.00, more preferably greater than 2.50 and most preferably greater than 2.60 is used. Such a refractive index results in a high white colour intensity with a minimal amount of pigment. The white pigments may be employed singly or in combination.

Titanium oxide occurs in the crystalline forms of anatase type, rutile type and brookite type. The anatase type has a relatively low density and is easily ground into fine particles, while the rutile type has a relatively high refractive index, exhibiting a high covering power. Either one of these is usable in this invention.

For surface treatment of the titanium oxide, an aqueous treatment or a gas phase treatment is applied, and an alumina-silica treating agent is usually employed. Untreated-, alumina treated- or alumina-silica treated-titanium oxide are employable. Alone or in addition to the previous surface treatments, an organic surface treatment may be used.

When used in inkjet inks, the numeric average particle diameter of the titanium oxide or other white pigments is preferably from 180 to 400 nm. Sufficient hiding power can generally not be obtained when the average diameter is less than 180 nm, and the storage ability and the jet-out suitability of the ink tend to be degraded when the average diameter exceeds 400 nm.

### Dyes

The colourant may also be a dye. An advantage of a dye is the fact that they will generally not affect the ionic conductivity, for example by blocking pores of a separator as in the case of pigments.

The dyes may be selected from the group consisting of azo dyes, anthraquinone dyes, benzodifuranone dyes, polymethine dyes, including azacarbocyanines and hemicyanines, indigoid dyes, styryl dyes, di- and triaryl carbonium dyes, phtalocyanines, quinophtalones, indo-anilines and sulfur dyes.

Further types of dyes can be found in The Chemistry and Application of Dyes (edited by David R. Waring and Geoffrey Hallas, Plenum Press, New York and London, ISBN 0-306-43278-1) and in and in Industrial Dyes, Chemistry, Properties, Applications (edited by Klaus Hunger, Wiley-VCH, ISBN 3-527-30426-6).

The dyes may be low molecular or polymeric. The dyes may be anionic, cationic or neutral, adjusted to the type of membrane under consideration. As mentioned above, the membrane may be selected from an AWE membrane, an Anion Exchange Membrane (AEM) and a Proton Exchange Membrane (PEM).The membrane can be used as a mordant to fix the dye to the membrane to avoid diffusion of the dye. A typical example is the combination of an anionic AEM and a cationic dye. For AWE membranes, such as Zirfon^{®} type of membranes, the inorganic particles may be used to fix the dye.

Typical low molecular dyes are given in Table 1 below, without being limited thereto.

**Table 1**

| | |
|---|---|
| 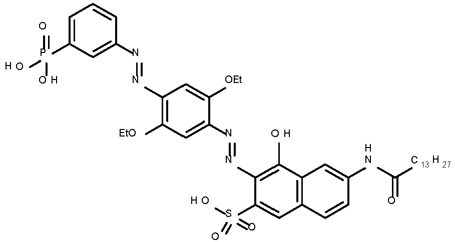 | AZO-1 |
| 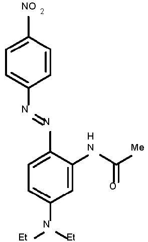 | AZO-2 |
| 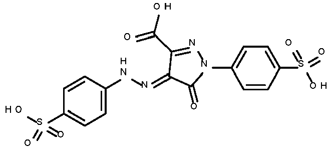 | AZO-3 |
| 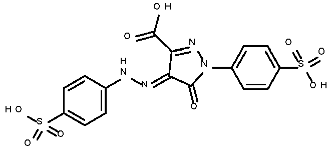 | AZO-4 |
| 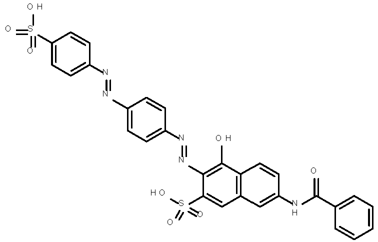 | AZO-5 |
| 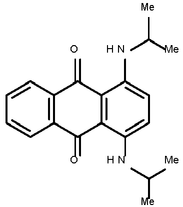 | ANTHRA-1 |
| 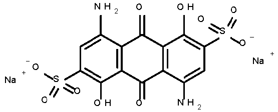 | ANTHRA-2 |
| 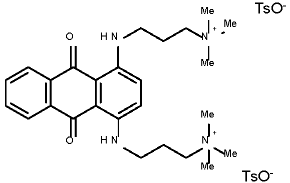 | ANTHRA-3 |
| 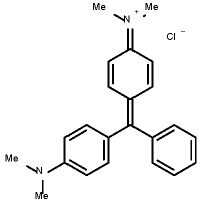 | TRIARYL-1 |
| 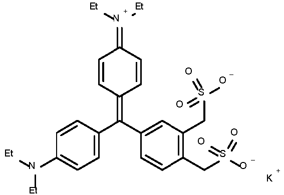 | TRIARYL-2 |
| 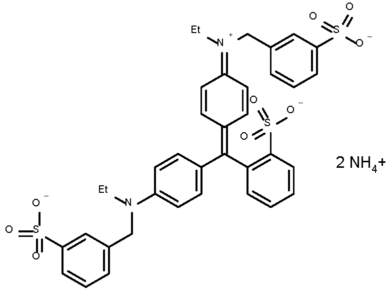 | TRIARYL-3 |
| 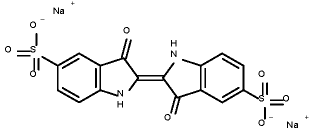 | INDIGO-1 |
| 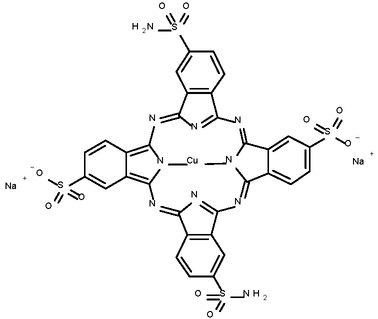 | PHTALO-1 |
| 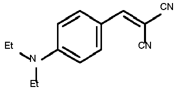 | STYRYL-1 |
| 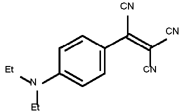 | STYRYL-2 |
| 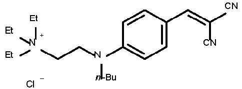 | STYRYL-3 |
| 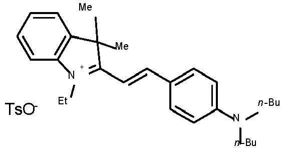 | CYA-1 |
| 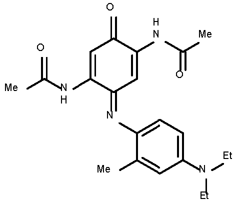 | INDO-1 |
| 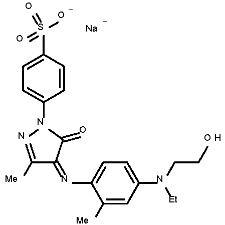 | INDO-2 |

Typical polymeric dyes are given in Table 2 below, without being limited thereto.

**Table 2**

| | |
|---|---|
| 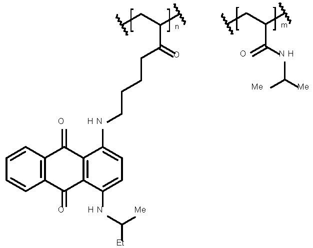 | POLYDYE-1 |
| 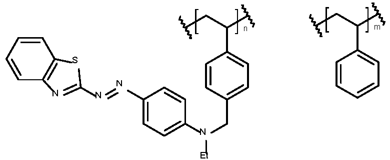 | POLYDYE-2 |
| 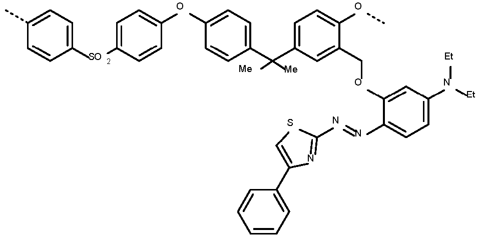 | POLYDYE-3 |
| 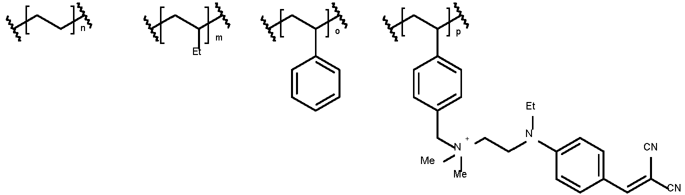 | POLYDYE-4 |
| 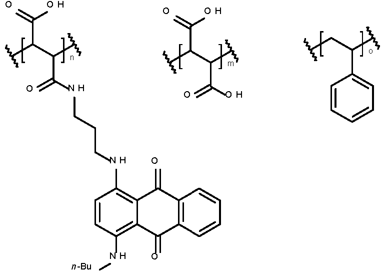 | POLYDYE-5 |

In one embodiment, the membrane uses a colourant that bleaches during operation in an electrolyser. Such an effect can be used to characterize the operating time of a membrane. Dyes are then selected that degrade in the electrolyte, which is acidic in case of PEM and alkaline in case of AEM or AWE membranes.

Typical examples of decolourizing dyes are given in Table 3 below, without being limited thereto.

**Table 3**

| | |
|---|---|
| 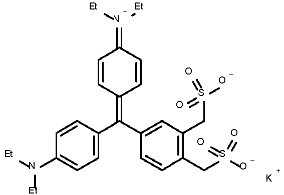 | DECOLOR-1 |
| 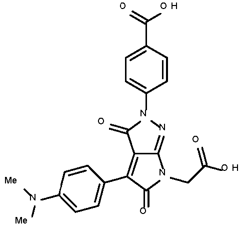 | DECOLOR-2 |
| 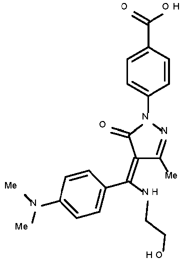 | DECOLOR-3 |
| 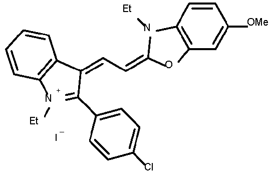 | DECOLOR-4 |

### Laser marking

Laser technology may be used to mark membranes with a pattern for making the anode facing side and the cathode facing side of the membrane distinguishable from each other. Any laser marking technology known in the state of the art may be used. However, laser engraving wherein material from the membrane is removed to realize a pattern may result in a decrease of the gas barrier properties, unless engraving is carried out in the periphery of the membrane that is covered by a sealant in an electrolyser.

Laser technologies generating a visual pattern without removing any material from the separator, referred to as laser marking, are particularly preferred. Visual markings may be generated by carbonization or by the use of leuco-dyes, preferably in combination with a thermal acid and a light to heat converter.

Typical leuco-dyes are given in Table 4, without being limited thereto.

**Table 4**

| | |
|---|---|
| 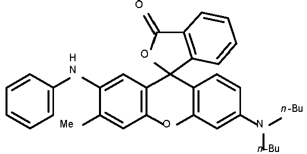 | LEUCO-1 |
| 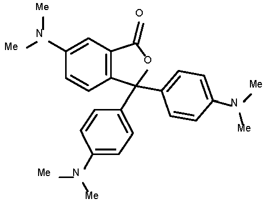 | LEUCO-2 |
| 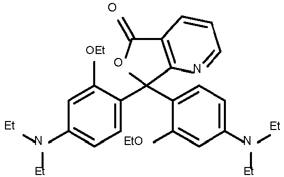 | LEUCO-3 |
| 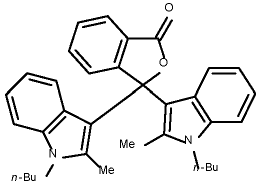 | LEUCO-4 |
| 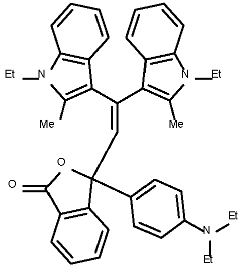 | LEUCO-5 |
| 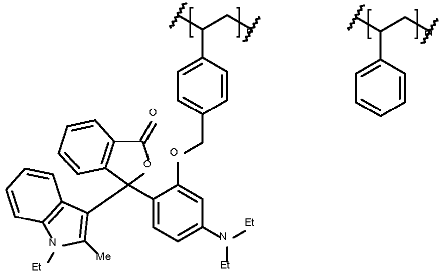 | LEUCO-6 |

Typical acid generators are given in Table 5, without being limited thereto.

**Table 5**

| | |
|---|---|
| 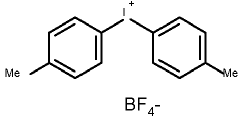 | ACID-1 |
| 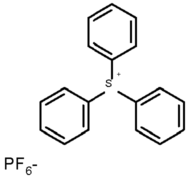 | ACID-2 |
| 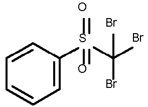 | ACID-3 |
| 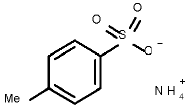 | ACID-4 |
| 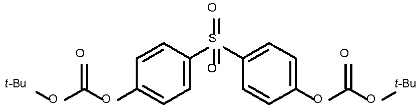 | ACID-5 |
| 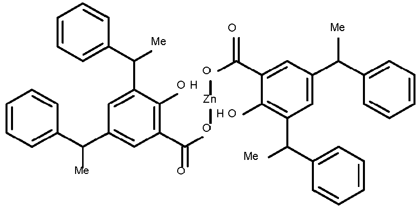 | ACID-6 |

Light to heat converters can be selected from NIR (Near InfraRed) absorbing organic and inorganic pigments and NIR absorbing dyes. The dyes can be selected according to the emission wave length of the laser technology used.

Typical light to heat converters are given in Table 6, without being limited thereto.

**Table 6**

| | |
|---|---|
| 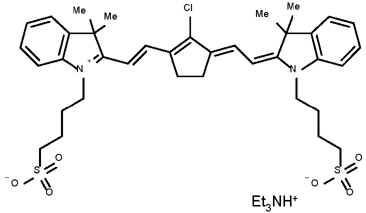 | NIR-1 |
| 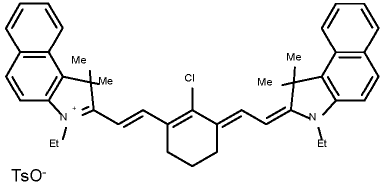 | NIR-2 |
| 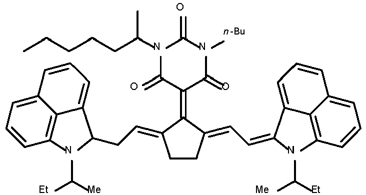 | NIR-3 |
| 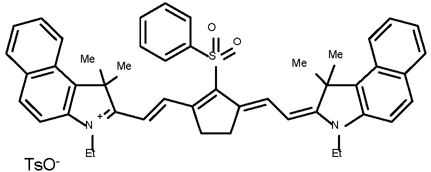 | NIR-4 |
| 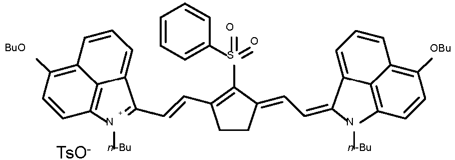 | NIR-5 |

Laser marking methods and chemicals that may be used in the present invention are disclosed in WO2019/007833 A1**,** WO2019/110438 A1**,** WO2020/011601 A1 and WO2017/093228 A1**,** all from AGFA GEVAERT NV.

The leuco dyes, acid generators and light to heat convertors may be added to a colouring or to a layer of the separator, as described above. For example for an AWE separator, the laser marking ingredients may be added to the porous layer(s) (510, 520, 560) or to an additional colouring layer (540).

### Printing

The colourant may be printed on one or both surface(s) of a separator. In principle, any printing technique may be used, including offset printing, flexographic printing, screen printing and ink jet printing, with screen printing and ink jet printing being more preferred, and ink jet printing being most preferred.

The ink jet ink may be solvent based, aqueous or UV curable based, an aqueous ink being particularly preferred. Aqueous inks generally will not substantially affect the separator surface and its pore structure. UV curable inkjet inks tend to be more resistant against the electrolyte used in an electrolytic cell.

An inkjet ink for use in the present invention preferably comprises from 1 to 10 wt% of a colourant, preferably a dye or a pigment as for instance described above, more preferably a pigment.

The preparation and composition of inkjet inks and inkjet printing thereof is well-known and for example disclosed by Magdassi S., The Chemistry of Inkjet Inks, (ISBN-13 978-981-281-821-8). The colourant is printed on the separator at the end of the manufacturing process before or after cutting the separator into various formats. Preferably, the colourant is printed after cutting the separator to ensure the printed pattern ends up on the desired place of the separator.

### Separator for alkaline water electrolysis

The separator for alkaline water electrolysis is preferably a so-called organic/inorganic composite separator. The separator preferably includes at least one porous layer comprising inorganic particles and a polymer provided on a porous support. Due to the presence of inorganic particles a separator for alkaline water electrolysis typically has a white colour. For that reason, the colourant preferably has a colour other than white.

A so-called single sided AWE separator (Fig.5) refers to a separator comprising a porous layer (560) provided on one side of a porous support (530), while a so-called double sided AWE separator (Fig.3) refers to a separator wherein a porous layer (510, 520) is provided on both sides of a porous support (530).

The thickness of the separator is preferably from 25 to 750 µm, more preferably from 50 to 500 µm, most preferably from 75 to 250 µm and particularly preferred from 100 to 200 µm. Increasing the thickness of the separator typically results in a higher physical strength of the separator. However, increasing the thickness of the separator may also result in a decrease of the electrolysis efficiency due to an increase of the ionic resistance.

The gas permeability of the membrane is preferably between 1 and 7 L/min.cm², more preferably between 1.5 and 6.5 L/min.cm², most preferably between 2 and 5.5 L/min.cm². The gas permeability may be measured with a Porolux^{™} 1000 apparatus at 5 bar. A too high gas permeability may result in a too high flow of electrolyte, which could bring dissolved gas to the wrong side of the electrolyser, resulting in an increase of the HTO (vol% hydrogen present in the oxygen formed at the anode) or OTH (vol% oxygen present in the hydrogen formed at the cathode).

The separator preferably has an ionic resistance of less than 0.15 ohm.cm², more preferably less than 0.1 ohm.cm², most preferably less than 0.07 ohm.cm² at 80°C in a 30 wt% aqueous KOH solution. The ionic resistance may be determined with an Inolab^{®} Multi 9310 IDS apparatus available from VWR, part of Avantor, equipped with a TetraCon 925 conductivity cell available from Xylem.

As described below in more detail a separator according to the present invention is preferably prepared by the application of a coating solution, also referred to herein as a dope solution, on one or both sides of a porous support.

The dope solution preferably comprises a polymer, ZrOz particles and a solvent, all described in more detail below.

A porous layer is then obtained after a phase inversion step wherein the polymer forms a three-dimensional porous polymer network.

Upon application of the dope solution(s) on one or both sides of the porous support, the dope solution(s) preferably impregnate the porous support. The porous support is more preferably completely impregnated with the dope solution(s). Such impregnation of the dope solution(s) into the porous support ensures that after phase inversion the three-dimensional porous polymer network also extends into the porous support, resulting in an improved adhesion between the porous layer and the porous support.

The separator preferably includes pores having a pore diameter that is sufficiently small to prevent gas crossover. On the other hand, to ensure efficient transportation of hydroxyl ions from the cathode to the anode, larger pore diameters are preferred. An efficient transportation of the hydroxyl ions requires an efficient penetration of electrolyte into the separator.

The pores are preferably characterized using the Bubble Point Test method described in American Society for Testing and Materials Standard (ASTM) Method F316. This technique is based on the displacement of a wetting liquid embedded in the separator by applying an inert pressurised gas. Only through-pores are measured in this way. The most challenging part for the gas to displace the liquid along the entire pore path is the most constricted section of the pore, also known as pore throat. The diameter of a pore measured with the Bubble Point Test method is the diameter of that pore throat, regardless of where the pore throat is positioned in the pore path. The pore diameters referred to herein are all measured using the Bubble Test method described above.

The maximum pore diameter (PDmax) of the separator is preferably from 0.05 to 2 µm, more preferably from 0.10 to 1 µm, most preferably from 0.2 to 0.6 µm. The average pore diameter of the separator is preferably from 0.01 to 1 µm, more preferably from 0.02 to 0.5 µm, most preferably from 0.05 to 0.25 µm.

The Bubble Point Test method may be adapted to measure a maximum pore diameter (PDmax) on both sides of a separator by using a grid supporting one side of the separator during the measurement. Another measurement is then carried out using the grid supporting the other side of the separator. Both sides of the separator may have identical or different maximum pore diameters.

Preferred separators have a maximum pore diameter PDmax(1) on one side and a maximum pore diameter PDmax(2) on the other side wherein both PDmax(1) and PDmax(2) are from 0.05 to 2 µm, more preferred from 0.10 to 1 µm, most preferred from 0.2 to 0.6 µm and wherein the ratio PDmax(1)/PDmax(2) is from 0.9 to 1.1, more preferred from 0.95 to 1.05.

However, the separator may also have maximum pore diameters PDmax(1) and PDmax(2) that are substantially different from each other, for example to avoid trapping of gas bubbles inside the separator. For example a separator having on one side a maximum pore diameter PDmax(1) from 0.05 to 0.45 µm, more preferably from 0.1 to 0.4 µm, most preferably from 0.15 to 0.35 µm and on the other side a maximum pore diameter PDmax(2) from 0.2 to 6.5 µm, more preferably from 0.25 to1.50 µm, most preferably from 0.3 to 0.6 µm.

The ratio between PDmax(2) and PDmax(1) is preferably from 1.1 to 20, more preferably from 1.25 to 10, most preferably from 2 to 7.5. The smaller PDmax(1) ensure an efficient separation of hydrogen and oxygen while PDmax(2) ensures a good penetration of the electrolyte in the separator resulting in a sufficient ionic conductivity.

The porosity of the separator is preferably between 30 and 80 %, more preferably between 50 and 70 %. A separator having a porosity within the above ranges typically has excellent ion permeability and excellent gas barrier properties because the pores of the diaphragm are continuously filled with an electrolyte solution.

The separator preferably has a water permeability from 200 to 800 l/bar.h.m², more preferably from 300 to 600 l/bar.h.m².

### Porous support

The porous support may be used to reinforce the separator to ensure its mechanical strength.

A thickness of the porous support is preferably 350 µm or less, more preferably 200 µm or less, most preferably 100 µm or less, particularly preferred 75 µm or less.

It has been observed that the ion conductivity through a reinforced separator increases when the thickness of the porous support decreases.

However, to ensure sufficient mechanical properties of the reinforced separator, the thickness of the porous support is preferably 20 µm or more, more preferably 40 µm or more.

The porous support may be selected from the group consisting of a porous fabric and a porous ceramic plate.

The porous support is preferably a non-woven fabric, a woven fabric, a mesh or a felt, more preferably a non-woven or woven fabric.

Woven fabrics typically have a better dimensional stability and homogeneity of open area and thickness. However, the manufacture of woven fabrics with a thickness of 100 µm or less is more complex resulting in more expensive fabrics. The manufacture of non-woven fabrics is less complex, even for fabrics having a thickness of 100 µm or less. Also, non-woven fabrics may have a larger open area.

The open area of the porous support is preferably from 30 to 80%, more preferably from 40 to 70 %, to ensure a good penetration of the electrolyte into the support.

The fabric preferably has a fibre diameter from 10 µm to 200 µm, more preferably from 20 µm to 150 µm, most preferably from 30 µm to 100 µm. Fabrics having a lower thickness preferably have a smaller fibre diameter. For example a fabric having a thickness of 150 µm or lower preferably contains fibres having a fibre diameter of 75 µm or lower, more preferably of 50 µm or lower, most preferably of 35 µm or lower.

To further reduce the thickness of the fabric, the ratio of the gauze thickness to the fibre diameter is preferably less than 2.0, more preferably 1.7 or less, most preferably 1.4 or less. A thinner fabric makes it possible to prepare thinner separators.

The porous support preferably includes a polymer such as for example polypropylene, polyethylene, polysulfone, polyphenylene sulfide, polyamide/nylon, polyether sulfone, polyphenyl sulfone, polyethylene terephthalate, polyether ether ketone, sulfonated polyether ether keton, monochlorotrifluoroethylene, copolymers of ethylene with tetrafluorethylene or chlorotrifluoroethylene, polyimide, polyether imide and m-aramide.

A preferred porous support includes polyphenylene sulphide (PPS) or polyether ether ketone (PEEK).

A PPS or PEEK based porous support has a high resistance to high-temperature, high concentration alkaline solutions and a high chemical stability against active oxygen evolved from an anode during the water electrolysis process. Also, PPS and PEEK can be easily processed into various forms such as a woven fabric or a non-woven fabric.

The density of the porous support is preferably between 0.1 to 0.7 g/cm³.

The porous support is preferably a continuous web to enable a manufacturing process as disclosed in EP1776490 A (VITO) and WO2009/147084 A1 (Agfa-Gevaert).

The width of the web is preferably between 30 and 300 cm, more preferably between 40 and 200 cm.

### Polymer

The porous layer preferably comprises a polymer.

The polymer forms a three dimensional porous network, the result of a phase inversion step in the preparation of the separator, as described below.

The polymer may be selected from a fluorine resin such as polyvinylidene fluoride (PVDF) and polytetrafluoroethylene (PTFE), an olefin such as polypropylene (PP), and an aromatic hydrocarbon resin such as polyethylene terephthalate (PET) and polystyrene (PS). The polymer may be used alone, or two or more of the polymer resins may be used in combination.

PVDF and vinylidenefluoride (VDF)-copolymers are preferred for their oxidation/reduction resistance and film-forming properties. Among these, terpolymers of VDF, hexanefluoropropylene (HFP) and chlorotrifluoroethylene (CTFE) are preferred for their excellent swelling properties, heat resistance and adhesion to electrodes.

Another preferred polymer is an aromatic hydrocarbon for their excellent heat and alkali resistance. Examples include polyethylene terephthalate, polybutylene terephthalate, polybutylene naphthalate, polystyrene, polysulfone, polyethersulfone, polyphenylene sulphide and polyphenyl sulfone.

Other polymers that may be used are polyacrylate, polyetherimide, polyimide, and polyamide-imide.

A particular preferred polymer is selected from the group consisting of polysulfone, polyethersulfone, polyphenylene sulfide, polyether ether ketone and polyphenylsulfone, polysulfone being the most preferred.

The porous layer may comprise two, three or more different polymers as described above.

The molecular weight (Mw) of the polymer is preferably between 10 000 and 500 000, more preferably between 25 000 and 250 000. When the Mw is too low, the physical strength and durability of the porous layer may become insufficient. When the Mw is too high, the viscosity of the dope solution may become too high.

Examples of polysulfones, polyether sulfones and combinations thereof are disclosed in EP3085815 A1 (Kawasaki, De Nora & ThyssenKrupp Nucera), paragraphs [0021] to [0032].

The amount of polymer is preferably from 5 to 40 wt%, more preferably from 10 to 30 wt%, most preferably from 15 to 25 wt%, all relative to the total dry weight of the porous layer.

### Inorganic particles

The porous layer preferably includes inorganic particles, for example to improve the hydrophilicity and/or the alkali-stability of the porous polymer layer. The hydrophilic nature of the porous layer prevents the adhesion of hydrogen and oxygen bubbles. Such adhesion of gas bubbles would reduce the electrolysis efficiency.

Preferred inorganic particles are selected from metal oxides and metal hydroxides.

Preferred metal oxides are selected from the group consisting of zirconium oxide, titanium oxide, bismuth oxide, cerium oxide and magnesium oxide, zirconium oxide being the most preferred.

Preferred metal hydroxides are selected from the group consisting of zirconium hydroxide, titanium hydroxide, bismuth hydroxide, cerium hydroxide and magnesium hydroxide. A particularly preferred magnesium hydroxide is disclosed in EP3660188 A1 (Nippon Shokubai), paragraphs [0040] to [0063].

Other preferred inorganic particles are sulfates of calcium, barium, lead or strontium, barium sulfate particles being more preferred. Such barium are disclosed in EP3994295 A1 (Agfa Gevaert).

Still other inorganic particles that may be used are nitrides and carbides of Group IV elements of the periodic table.

A combination of one or more different inorganic particles may be used.

The inorganic particles may be natural substances or synthetic substances.

The surface of the inorganic particles may be untreated or may be surface-treated with for example a silane coupling agent, stearic acid, oleic acid, or a phosphoric acid ester.

The shape of the inorganic particles is not particularly limited as long as it is in the form of particles and may be any of irregular shapes, spherical shapes, such as true spherical shapes, and oblong spherical shapes, plate shapes, such as flake shapes and hexagonal plate shapes, and fibrous shapes.

The inorganic particles preferably have a d50 particle size measured by a Differential Sedimentation Method, for example using a CPS Disc Centrifuge particle size analyser, from 0.05 to 2.0 µm, more preferably from 0.1 to 1.5 µm, most preferably from 0.15 to 1.00 µm, particularly preferred from 0.2 to 0.75 µm. The d50 particle size is preferably 0.7 µm or less, more preferably 0.55 µm or less, most preferably 0.40 µm or less..

The d50 particle size is also known as the median diameter or the medium value of the particle size distribution. It is the value of the particle diameter at 50% in the cumulative distribution. For example, if d50 = 1.0 µm, then 50% of the particles are larger than 1.0 µm and 50% are smaller than 1.0 µm.

A combination of one or more different inorganic particles may be used.

The inorganic particles may be natural substances or synthetic substances.

The surface of the inorganic particles may be untreated or may be surface-treated with for example a silane coupling agent, stearic acid, oleic acid, or a phosphoric acid ester.

The shape of the inorganic particles is not particularly limited as long as it is in the form of particles and may be any of irregular shapes, spherical shapes such as true spherical shapes and oblong spherical shapes, plate shapes such as flake shapes and hexagonal plate shapes, and fibrous shapes.

The total amount of inorganic particles is preferably from 30 to 95 wt%, more preferably from 50 to 92 wt%, most preferably from 60 to 90 wt%, all relative to the total dry weight of the porous layer. The amount of inorganic particles is preferably at least 65 wt%, more preferably at least 75 wt%, all relative to the total dry weight of the porous layer.

The weight ratio of inorganic particles to polymer is preferably 60/40 or more, more preferably 70/30 or more, most preferably 75/25 or more.

### Preparation of the AWE separator

A preferred preparation method of a separator comprises the steps of:
- applying a dope solution as described below on one or both sides of a porous support;
- performing phase inversion on the applied dope solution thereby forming a separator (500) comprising a porous layer (510, 520, 560) on the support.

The applied dope solution preferably completely impregnates the porous support before performing the phase inversion.

A preferred method of manufacturing a reinforced separator is disclosed in EP1776490 A1 (Vito) and WO2009/147084 A1 (Agfa Gevaert) for separators having on both sides substantially identical pore diameters and EP3652362 A1 (Agfa Gevaert) for separators having on both sides different pore diameters. These methods result in web-reinforced separators wherein the web, i.e. the porous support, is nicely embedded in the separator, without appearance of the web at a surface of the separator.

Other manufacturing methods that may be used are disclosed in EP3272908 A1 (Asahi Kasei), EP3660188 A1 (Nippon Shokubai) and EP3312306 A1 (Kawasaki, ThyssenKrupp, Uhde Chlorine Engineers Japan Ltd, De Nora Permelec Ltd).

In case a colourant is applied on the surface of the separator, the manufacturing method of a separator described below is preferably used.

### Dope solution

The dope solution preferably comprises a polymer as described above, inorganic particles as described above and a solvent.

In one embodiment of the invention, the dope solution further includes a colourant as disclosed above, with the colourant preferably being a pigment or polymeric dye so that it does not migrate throughout the separator or is removed from the separator in, for instance a phase inversion step or a washing step. A dye that adsorbs on the inorganic particles may also be used. In case of a double sided AWE separator where two dope solutions are applied on one and the other side of a porous support (see Figure 3), one dope solution includes a colourant while the other does not or both dope solution includes a different colourant to render both sides of the separator visually distinct.

The solvent of the dope solution is preferably an organic solvent wherein the polymer can be dissolved. Moreover, the organic solvent is preferably miscible in water.

The solvent is preferably selected from N-methyl-pyrrolidone (NMP), N-ethyl-pyrrolidone (NEP), N-butyl-pyrrolidone (NBP), N,N-dimethylformamide (DMF), formamide, dimethylsulfoxide (DMSO), N,N-dimethylacetamide (DMAC), acetonitrile, and mixtures thereof.

A highly preferred solvent, for health and safety reasons, is N-butyl-pyrrolidone (NBP).

The dope solution may further comprise other ingredients to optimize the properties of the obtained polymer layers, for example their porosity and the maximum pore diameter at their outer surface.

The dope solution preferably comprises an additive to optimize the pore size at the surface and the inside of the porous layer. Such additives may be organic or inorganic compounds, or a combination thereof.

Organic compounds which may influence the pore formation in the porous layers include polyethylene glycol, polyethylene oxide, polypropylene glycol, ethylene glycol, tripropylene glycol, glycerol, polyhydric alcohols, dibutyl phthalate (DBP), diethyl phthalate (DEP), diundecyl phthalate (DUP), isononanoic acid or neodecanoic acid, polyvinylpyrrolidone, polyvinyl-alcohol, polyvinylacetate, polyethyleneimine, polyacrylic acid, methylcellulose and dextran.

Preferred organic compounds which may influence the pore formation in the porous layers are selected from polyethylene glycol, polyethylene oxide and polyvinyl pyrrolidone.

A preferred polyethylene glycol has a molecular weight of from 10 000 to 50 000, a preferred polyethylene oxide has a molecular weight of from 50 000 to 300 000, and a preferred polyvinylpyrrolidone has a molecular weight of from 30 000 to 1 000 000.

A particularly preferred organic compound which may influence the pore formation in the porous layers is glycerol.

Inorganic compounds which may influence the pore formation include calcium chloride, magnesium chloride, lithium chloride and barium sulfate.

A combination of two or more additives that influence the pore formation may be used.

The amount of compounds which may influence the pore formation is preferably between 0.1 and 15 wt%, more preferably between 0.5 and 5 wt% relative to the total weight of the dope solution.

The dope solutions provided on either side of the porous support may be the same or different.

### Applying the dope solution

The dope solution may be applied on the surface of a substrate, preferably a porous support, by any coating or casting technique.

A preferred coating technique is extrusion coating.

In a highly preferred embodiment, the dope solutions are applied by a slot die coating technique wherein two slot coating dies are located on either side of a porous support.

The slot coating dies are capable of holding the dope solution at a predetermined temperature, distributing the dope solutions uniformly over the support, and adjusting the coating thickness of the applied dope solutions.

The viscosity of the dope solutions measured at a shear rate of 100 s⁻¹ and a temperature of 20 °C is at least 7.5 Pa.s, more preferably at least 15 Pa.s, most preferably at least 30 Pa.s.

The dope solutions are preferably shear-thinning. The ratio of the viscosity at a shear rate of 1 s⁻¹ to the viscosity at a shear rate of 100 s⁻¹ is preferably at least 2, more preferably at least 2.5, most preferably at least 5.

The porous support is preferably a continuous web, which is transported downwards between the slot coating dies.

Immediately after the application, the porous support becomes impregnated with the dope solutions.

Preferably, the porous support becomes fully impregnated with the applied dope solutions.

### Phase inversion step

After applying the dope solution onto a porous support, the applied dope solution is subjected to phase inversion. In the phase inversion step, the applied dope solution is transformed into a porous layer.

In a preferred embodiment, two dope solutions applied on both sides of a porous support are subjected to phase inversion.

Any phase inversion mechanism may be used to prepare the porous hydrophilic layers from the applied dope solutions.

The phase inversion step preferably includes a so-called Liquid Induced Phase Separation (LIPS) step, a Vapour Induced Phase Separation (VIPS) step or a combination of a VIPS and a LIPS step. The phase inversion step preferably includes both a VIPS and a LIPS step.

Both LIPS and VIPS are non-solvent induced phase-inversion processes.

In a LIPS step the porous support provided with the dope solution(s) is contacted with a non-solvent that is miscible with the solvent of the dope solution.

Typically, this is carried out by immersing the porous support provided with the dope solution(s) into a non-solvent bath, also referred to as coagulation bath.

The non-solvent is preferably water; mixtures of water and an aprotic solvent selected from the group consisting of N-methylpyrrolidone (NMP), N-ethyl-pyrrolidone (NEP), N-butylpyrrolidone (NBP), dimethylformamide (DMF), dimethylsulfoxide (DMSO) and dimethylacetamide (DMAC); water solutions of water-soluble polymers such as PVP or PVA; or mixtures of water and alcohols, such as ethanol, propanol or isopropanol.

The non-solvent is most preferably water.

The temperature of the coagulation bath is preferably between 20 and 90°C, more preferably between 40 and 70°C.

The transfer of solvent from the coated polymer layer towards the non-solvent bath and of non-solvent into the polymer layer leads to phase inversion and the formation of a three-dimensional porous polymer network. The impregnation of the applied dope solution into the porous support results in a sufficient adhesion of the obtained hydrophilic layers onto the porous support.

In a preferred embodiment, a continuous web of porous support coated on either side with a dope solution is transported downwards, in a vertical position, towards the coagulation bath.

In a VIPS step, the porous support coated with the dope solutions is exposed to non-solvent vapour, preferably humid air.

Preferably, the coagulation step included both a VIPS and a LIPS step. Preferably the VIPS step is carried out before the LIPS step. In a particular preferred embodiment, the porous support coated with the dope solutions is first exposed to humid air (VIPS step) prior to immersion in a water bath (LIPS step).

VIPS is preferably carried out in an area between the slot coating dies and the surface of the non-solvent in the coagulation bath, which is shielded from the environment with for example thermal isolated metal plates.

The extent and rate of water transfer in the VIPS step can be controlled by adjusting the velocity of the air, the relative humidity and temperature of the air, as well as the exposure time.

The exposure time may be adjusted by changing the distance between the slot coating dies and the surface of the non-solvent in the coagulation bath and/or the speed with which the web is transported from the slot coating dies towards the coagulation bath.

The relative humidity in the VIPS area may be adjusted by the temperature of the coagulation bath and the shielding of the VIPS area from the environment and from the coagulation bath.

The speed of the air may be adjusted by the rotating speed of the ventilators in the VIPS area.

The VIPS step carried out on one side of the separator and on the other side of the separator, resulting in the second porous polymer layer, may be identical or different from each other.

After the phase inversion step, preferably the LIPS step in the coagulation bath, a washing step may be carried out.

After the phase inversion step, or the optional washing step, a drying step is preferably carried out.

A preferred method to prepare porous layers including a Polymer A on a porous support is disclosed in EP3933069 A1 (Agfa Gevaert), paragraphs 117 to 129 and Figures 2 and 3.

### Manufacturing of the separator

A method of manufacturing a separator according to the invention comprises the steps of: a) preparing a separator for water electrolysis; and b) applying a colourant on the separator by means of a coating or printing technique. Preferred coating and printing techniques are described above.

A preferred method of manufacturing a separator according to the present invention comprises the steps of: a) preparing a separator; b) coating a colouring layer on the separator; and c) drying the colouring layer, preferably with a NIR or CIR dryer. A NIR or CIR dryer can be easily controlled to minimize the amount of heat to which the separator is undesirably exposed.

Another preferred method of manufacturing a separator according to the present invention comprises the steps of: a) preparing a separator; and b) printing an ink on the separator.

A more preferred method of manufacturing a separator according to the present invention comprises the steps of: a) preparing a separator; and b) jetting an inkjet ink on the separator and c) immobilizing the inkjet ink by drying (preferably with a NIR or CIR dryer) and/or UV curing (preferably UV LED curing) the inkjet ink.

In a preferred embodiment, the inkjet ink is a UV curable inkjet ink that is UV cured by using UV LEDs. The advantage of UV LED curing is that it generates minimal heat that can affect the separator. The UV curing is preferably performed by UV LED sources having a spectral emission in the range of 360 to 420 nm, as these consume less energy.

The inkjet inks are jetted by print heads ejecting small droplets in a controlled manner through nozzles onto the separator moving relative to the print head(s). A preferred print head for the inkjet printing system is a piezoelectric head. Piezoelectric inkjet printing is based on the movement of a piezoelectric ceramic transducer when a voltage is applied thereto. The application of a voltage changes the shape of the piezoelectric ceramic transducer in the print head creating a void, which is then filled with inkjet ink or liquid. When the voltage is again removed, the ceramic expands to its original shape, ejecting a drop of ink from the print head. Piezoelectric print heads have proven to be the most reliable print heads in industrial printing. A particularly preferred piezoelectric print head is a so-called through-flow piezoelectric drop-on-demand print head.

### Electrolytic cell

An electrolytic cell typically consists of two electrodes, an anode and a cathode, separated by a separator. In operation, an electrolyte and a separator according to the invention is present between both electrodes. The type of electrodes, separator and electrolyte depends on the type of water electrolysis, i.e. AWE, PEM- or AEM electrolysis. An electrolytic cell is schematically represented in Figure 1 and 2.

When electrical current is supplied to the electrolysis cell for alkaline water electrolysis, hydroxyl ions of the electrolyte are oxidized into oxygen at the anode and water is reduced to hydrogen at the cathode. The hydroxyl ions formed at the cathode migrate through the separator to the anode. The separator prevents mixing of the hydrogen and oxygen gases formed during electrolysis.

Preferred alkaline electrolyte solutions are aqueous solutions of electrolytes selected from sodium hydroxide or potassium hydroxide. Potassium hydroxide electrolytes are often preferred due to their higher specific conductivity. The concentration of the electrolyte in the electrolyte solution is preferably from 20 to 40 wt%, relative to the total weight of the electrolyte solution.

The temperature of the electrolyte is preferably from 50°C to 120°C, more preferably from 75°C to 100°C, most preferably from 80 to 90 °C. However, a higher temperature, for example at least 100°C, more preferably from 125 to 165°C may result in a more efficient electrolysis.

An electrode typically include a substrate provided with a so-called catalyst layer. The catalyst layer may be different for the anode, where oxygen is formed, and the cathode, where hydrogen is formed.

Typical substrates are made from electrically conductive materials selected from the group consisting of nickel, iron, soft steels, stainless steels, vanadium, molybdenum, copper, silver, manganese, platinum group elements, graphite, and chromium. The substrates may be made from an electrically conductive alloy of two or more metals or a mixture of two or more electrically conductive materials. A preferred material is nickel or nickel-based alloys. Nickel has a good stability in strong alkaline solutions, has a good conductivity and is relatively cheap.

A catalyst layer preferably includes nickel, cobalt, iron, and platinum group elements. The catalyst layer may include these elements as elemental metals, compounds (e.g. oxides), composite oxides or alloys made of multiple metal elements, or mixtures thereof. Preferred catalyst layers include plated nickel, plated alloys of nickel and cobalt or nickel and iron, complex oxides including nickel and cobalt such as LaNiO₃, LaCoO₃, and NiCo₂O₄, compounds of platinum group elements such as iridium oxide, or carbon materials such as graphene.

A particularly preferred catalyst layer comprises Raney Nickel. The Raney nickel structure is formed by selectively leaching aluminium or zinc from a Ni-Al or Ni-Zn alloy. Lattice vacancies formed during leaching result in a large surface area and a high density of lattice defects, which are active sites for the electro-catalytic reaction to take place.

Preferred porous electrodes and methods to prepare them are disclosed in for example EP3575442 A1 (Asahi Kasei), paragraphs 23 to 84.

The pore size of porous electrodes may have an influence on the electrolysis efficiency. For example, in EP3575442 A1 (Asahi Kasei) it is disclosed that preferred pore sizes of the porous electrodes are from 10 nm up to 200 nm.

The catalyst layer may also include organic substances such as polymers to improve the durability and the adhesion towards the substrate.

In a so-called zero gap electrolytic cell the electrodes are placed directly in contact with the separator thereby reducing the space between both electrodes. Mesh-type or porous electrodes are used to enable the separator to be filled with electrolyte and for efficient removal of the oxygen and hydrogen gases formed. It has been observed such zero gap electrolytic cells operate at higher current densities.

However, in such a zero gap electrolytic cell it has been observed that gas bubbles formed inside the separator may accumulate at the top of the separator. Such accumulation of gas bubbles at the top of the separator may result in a higher ionic resistance in that part of the cell. A temperature rise as a result of a less efficient cooling by the electrolyte in that area of the electrolysis cell may even result in burning of the separator.

It has been observed that introducing a small distance between one side of the separator and at least one electrode results in less accumulation of gas bubbles inside the separator. The distance between one side of the separator and the anode and the distance between the other side of the separator and the cathode may be the same or different.

The distance between a surface of the separator and at least one electrode is preferably from 50 up to 500 µm, more preferably from 100 up to 250 µm.

A so-called spacer may be used to realize the distance between the separator and the electrode. In one embodiment, the spacer may also be incorporated into the above described colouring layer.

Such a spacer is preferably hydrophilic to avoid adhesion of gas bubbles to the spacer (static water contact angle is 90 °C or lower, preferably 45 °C or lower).

Such a spacer preferably has an open structure to ensure rapid and sufficient evacuation of gas bubbles.

A typical alkaline water electrolyser includes several electrolytic cells, also referred to as a stack of electrolytic cells.

Regarding the cell configuration, two types of electrolysers are typically used.

A unipolar (or "tank-type") electrolyser consists of alternate positive and negative electrodes held apart by a separator. Positive electrodes are all coupled together in parallel, as are the negative electrodes, and the whole assembly is immersed in a single electrolyte bath ("tank") to form a unit cell. A plant-scale electrolyser is then built up by connecting these units electrically in parallel. The total voltage applied to the whole electrolysis cell is the same as that applied to the individual unit cells.

On the other hand, in a bipolar electrolyser a metal sheet (or "bipole") connects electrically adjacent cells in series. The electrocatalyst for the negative electrode is coated on one face of the bipole and that for the positive electrode of the adjacent cell is coated on the reverse face. In this case, the total cell voltage is the sum of the individual unit cell voltages. Therefore, a series-connected stack of such cells forms a module that operates at a higher voltage and lower current than the tank-type (unipolar) design. To meet the requirements of a large electrolysis plant, these modules are connected in parallel so as to increase the current.

Membrane Electrode Assemblies (MEA) can also be used in an electrolyser. Such MEAs are typically prepared by applying a separator, preferably without a reinforcing support, on at least one porous electrode. Such MEAs are for example disclosed in EP2831312 A1 (Agfa Gevaert), EP3277862 A1 (De Nora) and WO2020/158719 A1 (Nippon Shokubai). Such MEAs may also be used in the electrolysis method according to the present invention.

The catalyst layer referred to above may also be provided on a surface of the separator, resulting in a so-called Catalyst Coated Membrane (CCM).

Such a CCM may have an improved contact surface between the membrane surface and the catalyst layer resulting in a higher electrolysis efficiency.

The catalyst layer may be applied on the membrane surface by any deposition technique such as coating, spraying, inkjet printing, gravure printing, screen printing, 3D printing, vapour deposition techniques.

### EXAMPLES

### Materials

All materials are available from standard suppliers such as TCI Europe unless otherwise specified.

Zirfon^{®} UTP 500 is commercially available from Agfa-Gevaert NV.

**Piperion^{®} Anion Exchange Membrane, 80 microns, self-supporting** is commercially available from FUELLCELL Store.

**TRIARYL-2** is Acid Green A (CASRN93942) and is commercially available from TCI Europe.

**TRIARYL-3** is Acid Blue 9 has been supplied as salt free quality (via reverse osmosis) by Clariant under the tradename Duasyn Acid Blue AE liq..

**PHTALO-1** is Direct Blue 199 supplied by Farben-Chem International (salt free via reverse osmosis).

**AZO-1** has been prepared according to the procedure described below. 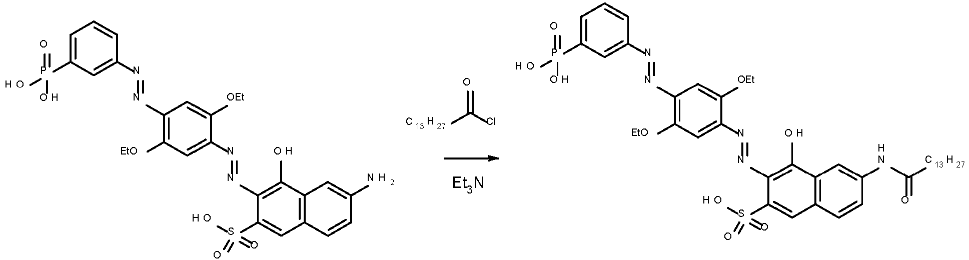 5 g (8.1 mmol) of the starting material (CASRN169798-05-4, prepared according to EP771860 (Seiko Epson Corporation)) was dissolved in 30 ml dimethyl acetamide. 1.4 ml (9.7 mmol) triethyl amine was added at room temperature, followed by the addition of 2.8 g (11.3 mmol) of myristoyl chloride. The reaction was allowed to continue for one hour at room temperature. The reaction was monitored using TLC chromatography on a Whatman Partisil KC18F-plate,using methanol/0.5 M NaCl 90/10 as eluent. (R_{f} of the AZO-1 : 0.42). AZO-1 partially precipitated from the medium and was isolated by filtration. The isolated AZO-1 was washed two times with 50 ml dimethyl acetamide and once with 100 ml ethyl acetate and dried. The filtrate was treated with 300 ml ethyl acetate upon which an additional amount of AZO-1 precipitated. This second fraction was isolated by filtration, washed with ethyl acetate and dried. Both fractions proved to be pure and were pooled. 5.5 g (yield : 82 %) of AZO-1 was isolated.

**Poly(ethylene glycol)** is a poly(ethylene glycol) 200 commercially available from Aldrich.

### Ink formulation

INK-1 to INK-4 were formulated by mixing the components according to Table 7. All percentages are weight percentages on the total ink composition.

**Table 7**

| **w% of** | **INK-1** | **INK-2** | **INK-3** | **INK-4** |
|---|---|---|---|---|
| TRIARYL-2 | 5 | - | - | - |
| TRIARYL-3 | - | 5 | - | - |
| PHTALO-1 | - | - | 5 | - |
| AZO-1 | - | - | - | 5 |
| 1,2-hexane diol | 3 | 3 | 3 | 3 |
| Glycerine | 25 | 25 | 25 | 25 |
| Poly(ethylene glycol) | 22 | 22 | 22 | 22 |
| water | 45 | 45 | 45 | 45 |

All inks were filtered over a 0.45 micron syringe filter (Chromasil PTFE-45/15).

### Example 1 : Ink jet printing on ZIRFON^{®} UTP500

Each of INK-1 to INK-4 were loaded into a Samba 12 nozzle cartridge and all samples were printed on a Dimatix DMP2800 printing at 5 kHz and a firing voltage of 25-30 V. A 1.5 by 6 cm patch of each ink was printed on a ZIRFON^{®} UTP 500 membrane. The printed membranes had a high optical contrast on one side of the membrane. The membranes were stored in water for 4 days at room temperature and the through membrane dye migration was evaluated visually. After 4 days of storage, there was no visual through membrane migration nor any visual color density in the aqueous medium. This example illustrates that, under normal storage conditions, the printed markings are fixed to one side of the membrane, allowing to identify the anode and cathode side of the membrane.

### Example 2 : evaluation of the alkaline resistance of the markings

INK-4, comprising an azo dye functionalized with a zirconium ion interacting group, was printed on a ZIRFON^{®} UTP 500 membrane as described in example 1. The membrane was stored in a 2 M potassium hydroxide solution for 4 days and the edge sharpness of the image was evaluated visually before and after storage. The edge sharpness of the image remained unchanged upon storing the membrane in an alkaline medium as well as the optical density in the image. No dye was leached into the KOH solution. This illustrates that the optical markings can be kept stable under operational conditions when using a contrast dye having affinity for zirconium oxide.

### Example 3 : printing of pattern on an AEM membrane

AEM membranes are typically transparent in contrast to composite membranes such as Zirfon^{®} UTP500. This makes it very hard to distinguish the anodic and cathodic side when designing asymmetrical AEM membranes. By printing a readable marking on the membrane both sides can be distinguished as from one side the image is perfectly readable while from the other side a mirror image is seen. This is illustrated with the following experiment.

INK-3 was printed on a Piperion^{®} Anion Exchange Membrane (80 microns, self-supporting) as described in example 1 followed by drying. The printed images are shown in Figure 6. As can be seen from Figure 6, it is perfectly possible to distinguish between the anodic and cathodic side of the membrane.

### Reference signs list

| | |
|---|---|
| 1 | Electrolytic cell |
| 10 | Separator |
| 100 | Anode facing layer |
| 101 | Anode facing side |
| 120 | Anode |
| 150 | Porous support |
| 200 | Cathode facing layer |
| 201 | Cathode facing side |
| 202 | Colouring layer |
| 203 | Pattern |
| 220 | Cathode |
| 300 | Separator for alkaline water electrolysis |
| 310 | Porous layer |
| 320 | Second porous layer |
| 330 | Porous support |
| 500 | Separator |
| 510 | Anode facing porous layer |
| 520 | Cathode facing porous layer |
| 530 | Porous support |
| 540 | Colouring layer |

## Claims

1. A separator for water electrolysis comprising an anode facing side (101) and a cathode facing side (201), **characterized in that** the cathode- and anode facing sides are visually distinct.

2. The separator for water electrolysis according to claim 1 wherein a colourant is contained inside the separator or present on a surface of the separator.

3. The separator for water electrolysis according to claim 1 or 2 having a colouring layer as an outermost layer of the separator.

4. The separator for water electrolysis according to any one of claims 1 to 3 having a printed layer or pattern on a surface of the separator.

5. The separator for water electrolysis according to claim 4 wherein the printing technique is selected from screen printing, flexographic printing and inkjet printing.

6. The separator for water electrolysis according to any one of the previous claims wherein the separator is selected from an alkaline water electrolysis (AWE) separator, a proton exchange membrane (PEM) and an anion exchange membrane (AEM).

7. The separator for water electrolysis according to any one of the previous claims, wherein the separator is an asymmetric separator.

8. The separator for water electrolysis according to any one of the previous claims, wherein the separator is a separator for alkaline water electrolysis.

9. The separator for water electrolysis according to any one of the previous claims, wherein the separator includes a machine-readable code.

10. The separator for water electrolysis according to any one of the previous claims, wherein the separator includes a colourant as an anticounterfeiting feature.

11. A method of manufacturing a separator as defined in any of the claims 1 to 10 comprising the steps of:
- preparing a separator for water electrolysis,
- applying a colourant on the separator by means of a coating or printing technique.

12. A method of manufacturing a separator according to claim 11, wherein the printing technique is selected from screen printing, flexographic printing and inkjet printing.

13. An electrolytic cell comprising a separator as defined in any of the claims 1 to 10.

14. An electrolyser comprising multiple electrolytic cells according to claim 13.

15. Use of a separator as defined in any one of the claims 1 to 10 for efficiently mounting a separator in an electrolytic cell or electrolyser.
